# EUROPÄISCHE PATENTSCHRIFT

(11) **EP 1 026 413 B1**
(45) Veröffentlichungstag und Bekanntmachung des Hinweises auf die Patenterteilung: **13.10.2004**
(21) Anmeldenummer: 99124988.9
(22) Anmeldetag: 15.12.1999
(51) Int. Cl.: F16B 13/06

(54) **Kunststoffdübel und Spreizschraube**
Plastic dowel and expanding screw
Cheville en matière plastique et vis d'expansion

(30) Priorität: 06.02.1999 DE 19904876; 05.08.1999 DE 19936927
(43) Veröffentlichungstag der Anmeldung: 09.08.2000
(73) Patentinhaber: fischerwerke Artur Fischer GmbH & Co. KG, 72178 Waldachtal (DE)
(72) Erfinder: Haug, Willi, 72250 Freudenstadt-Musbach (DE); Fischer, Rainer, 72178 Waldachtal (DE)

(56) Entgegenhaltungen:
- EP-A- 0 250 783
- CH-A- 457 978
- DE-A- 4 342 415
- DE-A- 19 505 311
- US-A- 4 712 955

## Beschreibung

Die Erfindung betrifft einen Kunststoffdübel und eine Spreizschraube mit den Merkmalen des Oberbegriffs des Anspruchs 1.

Kunststoffdübel sind an sich bekannt. Sie weisen eine Dübelhülse aus Kunststoff auf, in die eine Spreizschraube einschraubbar ist, wobei die Spreizschraube die Dübelhülse beim Einschrauben aufweitet. Üblicherweise weist die Dübelhülse Längsschlitze oder in einem Winkel zur Längsrichtung verlaufende Schlitze auf, die die Dübelhülse in Spreizzungen unterteilt, die durch Einschrauben der Spreizschraube aufgespreizt werden. Durch das Aufweiten bzw. Aufspreizen werden die Kunststoffdübel in einem Bohrloch, beispielsweise in einem Mauerwerk verankert.

Die bekannten Kunststoffdübel haben den Nachteil, dass sie sich bei einer Bohrlocherweiterung beispielsweise durch Rissbildung im Mauerwerk lockern, ihre Verankerungsoder Ausziehkraft nimmt ab.

Zur Befestigung im Möbelbereich ist aus der DE-A-195 05 311 ein Spreizdübel aus Kunststoff mit einliegender Spreizschraube bekannt. Die Spreizschraube weist ein im Querschnitt sägezahnförmiges Gewinde auf, dessen flachere und längere Gewindeflanke in Einschraubrichtung der Spreizschraube hinten angeordnet, d.h. einem Schraubenkopf zugewandt ist. Ein Innengewinde des Kunststoffdübels ist komplementär geformt. Die flachere und längere, hinten angeordnete Gewindeflanke bildet eine Art konische Spreizfläche, die sich über die Länge des Kunststoffdübels erstreckt und diesen über seine gesamte Länge gleichmäßig spreizt. Das Aufspreizen des Kunststoffdübels erfolgt durch eine ¾-Drehung der Spreizschraube im Kunststoffdübel.

Der Erfindung liegt die Aufgabe zugrunde, einen Kunststoffdübel und eine Spreizschraube der eingangs genannten Art vorzuschlagen, die zu einer Verankerung in Mauerwerk geeignet sind und der bei einer Bohrlocherweiterung eine hohe Verankerungs- oder Ausziehkraftaufweisen.

Diese Aufgabe wird erfindungsgemäß durch die Merkmale des Anspruchs 1 gelöst. Die Spreizschraube weist ein Schraubengewinde auf, dessen in Einschraubrichtung hintere Flanke flach in einem Winkel von 45° oder weniger zu einer Längsrichtung der Spreizschraube verläuft. Die in Einschraubrichtung hintere Flanke des Schraubengewindes bildet eine Schräg- oder Spreizfläche, die bei einer axialen Belastung der Spreizschraube in einer Ausziehrichtung die Dübelhülse zusätzlich aufweitet oder aufspreizt. Das Schraubengewinde bildet einen kegelähnlichen Spreizkörper, wobei der Kunststoff des Dübels im Bereich der Schraube geglättet und verdichtet wird. Weitet sich ein Bohrloch, in welchem der erfindungsgemäße Kunststoffdübel verankert ist, auf, so wird - bei einer Belastung der Spreizschraube in axialer Richtung - die Spreizschraube ein kurzes Stück in axialer Richtung aus der Dübelhülse herausgezogen. Dabei spreizt die in einem flachen Winkel von 45° oder weniger zur Längsrichtung stehende, in Einschraubrichtung hintere Flanke des Schraubengewindes die Dübelhülse weiter auf, der Kunststoffdübel wird nachgespreizt und bleibt mit näherungsweise unveränderter Verankerungskraft im Bohrloch verankert.

Erfindungsgemäß ist die in Einschraubrichtung hintere Gewindeflanke des Schraubengewindes konkav ausgebildet. Damit wird der Spitzenwinkel des Gewindes etwas kleiner, so dass sich das Gewinde leichter in das Material einschneidet. Ferner wird der Auslauf der Gewindeflanke durch die konkave Ausbildung flacher, was die Reibung am Anfang der Axialverschiebung der Spreizschraube in der Dübelhülse zum Nachspreizen des Kunststoffdübels vermindert und erst bei fortschreitender Axialverschiebung erhöht. Dadurch wird ein Nachspreizverhalten erreicht, bei der die Spreizkraft des Kunststoffdübels progressiv mit der Axialverschiebung zunimmt.

Der erfindungsgemäße Kunststoffdübel hat den Vorteil, dass er ein Nachspreizverhalten aufweist und damit zugzonentauglich ist. Weiterer Vorteil ist eine hohe Verankerungskraft in einem auch nicht erweiterten Bohrloch sowie ein günstiges Verhältnis zwischen einem zum Aufspreizen der Dübelhülse notwendigen Einschraubmoment der Spreizschraube und einer Verankerungskraft des Kunststoffdübels im Bohrloch.

Bei einer bevorzugten Ausgestaltung der Erfindung ist das Schraubengewinde als Sägezahngewinde ausgebildet, dessen flachere und längere Gewindeflanke, die die Spreizfläche bildet, in Einschraubrichtung der Spreizschraube nach hinten weist. Diese Ausgestaltung der Erfindung weist ein gutes Einschraubverhalten der Spreizschraube in die Dübelhülse auf. Weiterer Vorteil ist eine große, von der in Einschraubrichtung hinteren Gewindeflanke gebildeten Spreizfläche im Verhältnis zu einer axialen Länge des Schraubengewindes.

Bei einer Weiterbildung der Erfindung weist die Spreizschraube ein Einziehgewinde auf. Das Einziehgewinde ist vorzugsweise an einem vorderen Ende der Spreizschraube ausgebildet und befindet sich vor dem Schraubengewinde mit der flachen, hinteren Flanke. Das Einziehgewinde ist beispielsweise als an sich bekanntes Spitzgewinde mit steilem Flankenwinkel ausgebildet. Es ist insbesondere selbstschneidend und zieht die Spreizschraube beim Einschrauben in die Dübelhülse ein. Das Einziehgewinde befindet sich bei vollständig in die Dübelhülse eingeschraubter Spreizschraube vorzugsweise vor der Dübelhülse, d. h. bei vollständig eingeschraubter Spreizschraube ist das Einziehgewinde außer Eingriff von der Dübelhülse und behindert dadurch nicht eine Axialverschiebung der Spreizschraube in der Dübelhülse, die zum Nachspreizen des Kunststoffdübels erforderlich ist.

Um das Einschrauben der Spreizschraube in die Dübelhülse und insbesondere eine Axialverschiebung der Spreizschraube in der Dübelhülse zum Nachspreizen des Kunststoffdübels zu vereinfachen, ist bei einer Ausgestaltung der Erfindung eine reibungsmindernde Gleitbeschichtung der Spreizschraube und/oder im Inneren der Dübelhülse vorgesehen.

Die Erfindung wird nachfolgend anhand in der Zeichnung dargestellter Ausführungsbeispiele näher erläutert. Es zeigen:
- Figur 1: einen Kunststoffdübel und eine Spreizschraube teilweise geschnitten und
- Figur 2: eine erfindungsgemäße Ausführungsform der Spreizschraube.

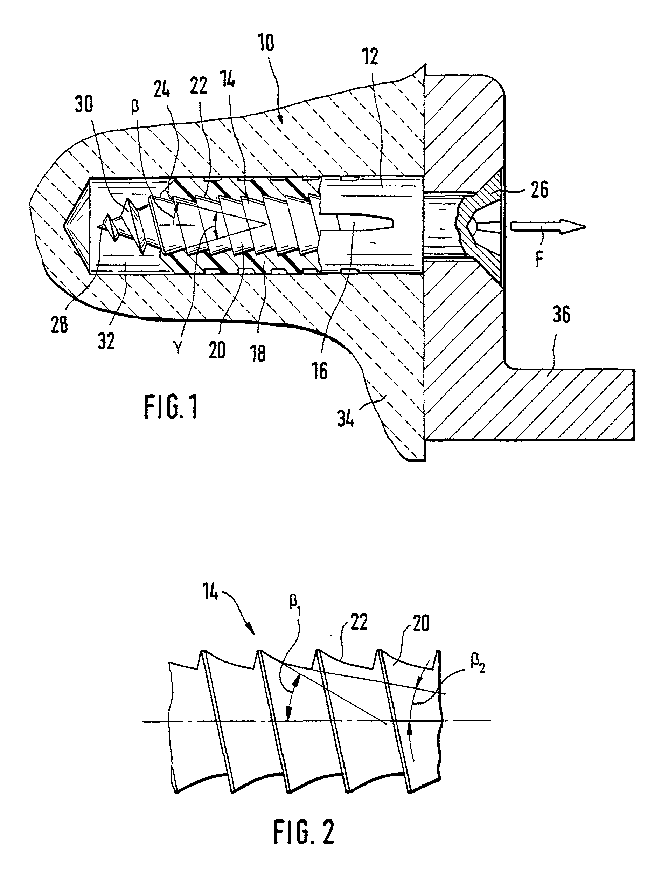

Der in Figur 1 dargestellte Kunststoffdübel 10 weist eine Dübelhülse 12 aus Kunststoff auf, in die eine Spreizschraube 14 aus Stahl eingeschraubt ist. Die Spreizhülse 12 ist mit Längsschlitzen 16 versehen, die die Dübelhülse 12 in Spreizzungen 18 teilt, die von der Spreizschraube 14 auseinander gespreizt sind.

Die Spreizschraube 14 weist ein Schraubengewinde 20 mit sägezahnförmigem Querschnitt (Sägezahngewinde) auf. Dabei ist eine längere, in einem flachen Winkel zu einer Längsachse der Spreizschraube 14 verlaufende Flanke 22 einem hinteren, einen Schraubenkopf 26 aufweisenden Ende der Spreizschraube 14 zugewandt. Diese hintere Gewindeflanke 22 bildet eine Schräg- oder Spreizfläche 22 der Spreizschraube 14. Eine steile und kürzere Gewindeflanke 24 ist einem vorderen, eine Schraubenspitze 28 aufweisenden Ende der Spreizschraube 14 zugewandt.

Die hintere Flanke 22 des Schraubengewindes 20 bildet eine Art Kegelstümpfe, die in einer Reihe axial hintereinander angeordnet sind. Die hintere Flanke 22 lässt sich auch als Mantelfläche eines Kegelstumpfs ansehen, die wendelförmig (schraubenlinienförmig) um die Spreizschraube 14 herum gewunden ist. Ein Winkel β, unter dem die hintere Gewindeflanke 22 zu einer Längsrichtung der Spreizschraube 14 verläuft, beträgt im dargestellten Ausführungsbeispiel ca. 16°. Dies ergibt einen Kegelwinkel von ca. 32°, wobei mit Kegelwinkel der Winkel gemeint ist, in welchem die hintere Flanke 22 des Gewindes 20 der Spreizschraube 14 an einander gegenüberliegenden Stellen verläuft.

An der Schraubenspitze 28 geht das Gewinde 20 der Spreizschraube 14 in ein Holzschrauben- oder Spitzgewinde über, das ein Einziehgewinde 30 der Spreizschraube 14 bildet. Das Einziehgewinde 30 befindet sich bei vollständig in die Dübelhülse 12 eingeschraubter Spreizschraube 14 wie dargestellt vor der Dübelhülse 12.

Zur Reibungsverminderung zwischen der Dübelhülse 12 und der Spreizschraube 14 ist die Spreizschraube 14 mit einer Gleitbeschichtung, beispielsweise einem Schmierfilm oder einer Kunststoffschicht beschichtet.

Zur Verankerung des erfindungsgemäßen Kunststoffdübels 10 in einem Bohrloch 32, beispielsweise in einem Mauerwerk 34 aus Beton, wird die Dübelhülse 12 in das Bohrloch 32 gesteckt. Anschließend wird die Spreizschraube 14 durch ein Durchgangsloch in einem zu befestigenden Gegenstand, im dargestellten Ausführungsbeispiel einer Konsole 36, durchgesteckt und in die Dübelhülse 12 eingeschraubt. Die Dübelhülse 12 kann mit einem Innengewinde versehen sein, im dargestellten Ausführungsbeispiel weist die Dübelhülse 12 zunächst kein Innengewinde auf, sondern das Innengewinde wird von der Spreizschraube 14 in die Dübelhülse 12 geschnitten. Zum Einschrauben der Spreizschraube 14 schneidet sich zunächst deren Einziehgewinde 30 in die Dübelhülse 12 ein und zieht dadurch das sich anschließende Sägezahn-Schraubengewinde 20 in die Dübelhülse 12 ein. Die Spreizschraube 14 wird wie dargestellt soweit eingeschraubt, dass ihre Schraubenspitze 28 mit dem Einziehgewinde 30 vom aus der Dübelhülse 12 austritt, d. h. das Einziehgewinde 30 befindet sich außer Eingriff von der Dübelhülse 12, wenn die Spreizschraube 14 vollständig in die Dübelhülse 12 eingeschraubt ist.

Die eingeschraubte Spreizschraube 14 weitet die Dübelhülse 12 auf, sie spreizt die Spreizzungen 18 auseinander und verankert dadurch den Kunststoffdübel 10 im Bohrloch 32 im Mauerwerk 34.

Wird die Spreizschraube 14 mit einer axialen, in einer Ausziehrichtung wirkenden Kraft, wie sie in der Zeichnung mit dem Pfeil F angedeutet ist, beansprucht, übt die hintere Flanke 22, die in einem spitzen Winkel β zur Längsrichtung der Spreizschraube 14 verläuft, eine Spreizkraft auf die Dübelhülse 12 und deren Spreizzungen 18 aus, die eine Verankerungskraft des Kunststoffdübels 10 im Bohrloch 32 vergrößert. Die hintere Flanke 22 des Schraubengewindes 20 der Spreizschraube 14 bildet eine sich wendelförmig um die Spreizschraube 14 herum windende Spreizfläche, die bei einer axialen Beanspruchung der Spreizschraube 14 in Ausziehrichtung eine auf die Spreizzungen 18 der Spreizhülse 12 ausgeübte Spreizkraft vergrößert.

Bei einer Erweiterung des Bohrlochs 32 beispielsweise infolge einer Rissbildung im Beton 34 bewirkt eine Kraft F in Ausziehrichtung auf die Spreizschraube 14 eine kurze axiale Verschiebung der Spreizschraube 14 in der Dübelhülse 12. Über die hintere Flanke 22 des Schraubengewindes 20 bewirkt die kurze axiale Verschiebung der Spreizschraube 14 in der Dübelhülse 12 ein weiteres Aufspreizen der Spreizzungen 18, also ein Nachspreizen des erfindungsgemäßen Kunststoffdübels 10, der Kunststoffdübel 10 bleibt auch bei einer Bohrlocherweiterung mit im Wesentlichen unveränderter Verankerungskraft im Bohrloch 32 verankert.

Da sich das Einziehgewinde 30 der Spreizschraube 14 bei verankertem Kunststoffdübel 10 außer Eingriff von der Dübelhülse 12 befindet, behindert das Einziehgewinde 30 nicht die Axialverschiebbarkeit der Spreizschraube 14 in der Dübelhülse, d. h. das Einziehgewinde 30 behindert nicht das Nachspreizverhalten des Kunststoffdübels 10.

Figur 2 zeigt eine erfindungsgemäße Ausführungsform des Schraubengewindes 20, bei der die flachere und längere Gewindeflanke 22 konkav ausgebildet ist. Durch die konkave Ausrundung ergibt sich ein vorderer Auslaufwinkel β1 von ca. 30° und ein hinterer Auslaufwinkel β2 von ca. 8°. Damit ergibt sich ein Nachspreizverhalten, bei dem die Spreizkraft mit zunehmender Axialverschiebung der Spreizschraube 14 gegenüber dem Kunststoffdübel progressiv ansteigt. Gleichzeitig wird auch der Spitzenwinkel des Gewindes verkleinert, so dass sich dieser leichter in das Dübelmaterial einschneidet.

## Patentansprüche

1. Kunststoffdübel mit einer aufweitbaren Dübelhülse (12) aus Kunststoff und Spreizschraube (14), die beim Einschrauben in die Dübelhülse (12) die Dübelhülse (12) aufweitet, wobei die Spreizschraube (14) ein Schraubengewinde (20) aufweist, dessen in Einschraubrichtung hintere Flanke (22) einen flachen Winkel von 45° oder weniger zu einer Längsrichtung der Spreizschraube (14) aufweist, **dadurch gekennzeichnet, dass** die in Einschraubrichtung hintere Gewindeflanke (22) des Schraubengewindes (20) konkav ausgebildet ist.

2. Kunststoffdübel und Spreizschraube nach Anspruch 1, **dadurch gekennzeichnet, dass** das Schraubengewinde (20) der Spreizschraube (14) einen sägezahnförmigen Querschnitt aufweist, wobei eine steilere und kürzere Gewindeflanke (24) in Einschraubrichtung der Spreizschraube (14) vorn und eine flachere und längere Gewindeflanke (22) in Einschraubrichtung der Spreizschraube (14) hinten angeordnet ist.

3. Kunststoffdübel und Spreizschraube nach Anspruch 1, **dadurch gekennzeichnet, dass** die Spreizschraube (14) ein Einziehgewinde (30) aufweist..

4. Kunststoffdübel und Spreizschraube nach Anspruch 3, **dadurch gekennzeichnet, dass** das Einziehgewinde (30) an einem vorderen Ende (28) der Spreizschraube (14) angeordnet ist.

5. Kunststoffdübel und Spreizschraube nach Anspruch 3, **dadurch gekennzeichnet, dass** sich das Einziehgewinde (30) außer Eingriff von der Dübelhülse (12) befindet, wenn die Spreizschraube (14) vollständig in die Dübelhülse (12) eingeschraubt ist.

6. Kunststoffdübel und Spreizschraube nach Anspruch 1, **dadurch gekennzeichnet, dass** die Spreizschraube (14) und/oder die Dübelhülse (12) in ihrem Inneren eine Gleitbeschichtung aufweist.

7. Kunststoffdübel und Spreizschraube nach Anspruch 1, **dadurch gekennzeichnet, dass** der vordere Auslaufwinkel (β1) der konkaven Gewindeflanke (22) am Außendurchmesser des Schraubengewindes (20) zwischen 25° und 35° zur Längsrichtung der Schraube und der hintere, an einen Gewindekern angrenzende Auslaufwinkel (β2) zwischen 5° und 15° zur Längsrichtung der Schraube liegt.

## Claims

1. Plastics fixing plug having an expansible fixing plug sleeve (12) made from plastics material and an expansion screw (14) which, on being screwed into the fixing plug sleeve (12), expands the fixing plug sleeve (12), the expansion screw (14) having a screw thread (20) whose rear flank (22) in the screwing-in direction has a shallow angle of 45° or less with respect to the longitudinal direction of the expansion screw (14), **characterised in that** the rear flank (22) of the screw thread (20) in the screwing-in direction is of concave form.

2. Plastics fixing plug and expansion screw according to claim 1, **characterised in that** the screw thread (20) of the expansion screw (14) is of sawtooth-shaped cross-section, a steeper and shorter thread flank (24) being arranged to the front in the screwing-in direction of the expansion screw (14) and a shallower and longer thread flank (22) being arranged to the rear in the screwing-in direction of the expansion screw (14).

3. Plastics fixing plug and expansion screw according to claim 1, **characterised in that** the expansion screw (14) has a draw-in thread (30).

4. Plastics fixing plug and expansion screw according to claim 3, **characterised in that** the draw-in thread (30) is arranged at the front end (28) of the expansion screw (14).

5. Plastics fixing plug and expansion screw according to claim 3, **characterised in that** the draw-in thread (30) is out of engagement with the fixing plug sleeve (12) when the expansion screw (14) has been screwed into the fixing plug sleeve (12) completely.

6. Plastics fixing plug and expansion screw according to claim 1, **characterised in that** the expansion screw (14) and/or the inside of the fixing plug sleeve (12) has a low-friction coating.

7. Plastics fixing plug and expansion screw according to claim 1, **characterised in that** the forward terminating angle (β1) of the concave thread flank (22) at the external diameter of the screw thread (20) is between 25° and 35° with respect to the longitudinal direction of the screw and the rear terminating angle (β2) adjacent to the thread core is between 5° and 15° with respect to the longitudinal direction of the screw.

## Revendications

1. Cheville en matière plastique avec un manchon (12) expansible en matière plastique et vis d'expansion (14) qui, pendant le vissage dans le manchon de la cheville (12), élargit le manchon de la cheville (12), la vis d'expansion (14) étant munie d'un filetage (20) dont le flanc arrière (22), par référence à la direction d'introduction de la vis, forme un angle plan de 45° ou inférieur par rapport à la direction longitudinale de la vis d'expansion (14), **caractérisées en ce que** le flanc arrière (22), par référence à la direction d'introduction de la vis, du filetage (20) est réalisé avec une forme concave.

2. Cheville en matière plastique et vis d'expansion selon la revendication 1, **caractérisées en ce que** le filetage (20) de la vis d'expansion (14) présente une section en dents de scie, un flanc (24) plus raide et plus court des filets étant agencé à l'avant par référence à la direction d'introduction de la vis, et un flanc (22) plus plat et plus long des filets étant agencé à l'arrière par référence à la direction d'introduction de la vis.

3. Cheville en matière plastique et vis d'expansion selon la revendication 1, **caractérisées en ce que** la vis d'expansion (14) est munie d'un filetage de pénétration (30).

4. Cheville en matière plastique et vis d'expansion selon la revendication 3, **caractérisées en ce que** le filetage de pénétration (30) est réalisé sur une extrémité avant (28) de la vis d'expansion (14).

5. Cheville en matière plastique et vis d'expansion selon la revendication 3, **caractérisées en ce que** le filetage de pénétration (30) n'est pas en prise avec le manchon de la cheville (12) lorsque la vis d'expansion (14) est entièrement insérée dans le manchon de la cheville (12).

6. Cheville en matière plastique et vis d'expansion selon la revendication 1, **caractérisées en ce que** la vis d'expansion (14) et/ou le manchon de la cheville (12) dans sa partie intérieure sont revêtus d'une couche de glissement.

7. Cheville en matière plastique et vis d'expansion selon la revendication 1, **caractérisées en ce que** l'angle en fin de filet avant (β1) du flanc (22) concave, sur le diamètre extérieur du filetage (20), mesure entre 25° et 35° par rapport à la direction longitudinale de la vis et l'angle en fin de filet arrière (β2) adjacent au fond du filet mesure entre 5° et 15° par rapport à la direction longitudinale de la vis.
